# EUROPEAN PATENT SPECIFICATION

(11) **EP 2 837 538 B1**
(45) Date of publication and mention of the grant of the patent: **02.06.2021**
(21) Application number: 13180681.2
(22) Date of filing: 16.08.2013
(51) Int. Cl.: B60W 30/09, B60W 30/095, B60W 30/18, B60W 50/08, B60W 10/18, B60W 10/20

(54) **A vehicle safety system**
Fahrzeugsicherheitssystem
Système de sécurité de véhicule

(43) Date of publication of application: 18.02.2015
(73) Proprietor: Veoneer Sweden AB, 447 83 Vårgårda (SE)
(72) Inventor: Holzknecht, Stefan, 85622 Feldkirchen (DE)
(74) Representative: Forresters IP LLP

(56) References cited:
- DE-A1-102011 080 789
- DE-A1-102011 103 610
- DE-A1-102011 103 652
- US-A1- 2011 313 665

## Description

This invention relates to a vehicle safety system, and in particular concerns a system to increase safety when overtaking another vehicle.

When overtaking a vehicle, it is often necessary to move into a lane which is designated for oncoming traffic, i.e. for vehicles which are travelling in the opposite direction. This manoeuvre therefore involves the possibility of the relatively high-speed head-on collision with another vehicle. As such, overtaking manoeuvres are notoriously dangerous and many drivers will attempt an overtaking manoeuvre only as a last resort.

DE 10 2011 103610 discloses a method of determining an oncoming traffic situation parameter that describes oncoming traffic situation. A critical state of the oncoming traffic situation is recognized by comparing the oncoming traffic situation parameter with a critical criterion. A safety response is triggered for descaling the critical state of the oncoming traffic situation when the critical criterion is met. A warning is triggered based on the safety response. A response of a rider is determined for descaling the critical state of the oncoming traffic situation during riding a motor car.

US 2011/313665 discloses a method for automatically detecting a driving maneuver of a motor vehicle, in particular an overtaking maneuver or an evasive maneuver, in which the surroundings of the vehicle are covered and an electronic image thereof is created, the electronic image is used for the detection of a traffic lane and/or of a road as well as of-objects in the surroundings of the vehicle, longitudinal-dynamics and lateral-dynamics movement information of motor vehicle is determined, and the position of motor vehicle is odometrically estimated on the basis of the data of lane detection and/or road detection and/or of the movement; of motor vehicle, wherein the invention provides that a) the following indicator quantities are formed from the estimated position data of motor vehicle: a value of the lateral distance of motor vehicle from a road marking or traffic line, a time-to-collision value relative to the distance from the object located in the direction of motion, in particular from the vehicle driving ahead, a longitudinal-dynamics overtaking-or-evasive-maneuver indicator formed from the indicator quantity of the time-to-collision value and from a value that corresponds to the position of the gas pedal of motor vehicle, and b) that threshold values are determined for said indicator quantities, which threshold values are used as criteria for detecting partial maneuvers of an overtaking or evasive maneuver, in particular a maneuver to follow a vehicle driving ahead, a lane change, a maneuver to pass the stationary or moving object and a maneuver to cut into the lane of the overtaken object, as well as for detecting transitions between said partial maneuvers.

Further prior art is known from DE 10 2011 080789.

It is an object of the present invention to seek to provide a system which reduces the risks associated with an overtaking manoeuvre.

Accordingly, one aspect of the present invention provides a vehicle safety system comprising: a lane detection arrangement to detect, on a road along which the vehicle is driving, a driving lane and at least one substantially adjacent oncoming lane; a first vehicle detection system to detect the speed and/or position, relative to the vehicle, of a subject vehicle in the driving lane ahead of the vehicle; an overtaking detection arrangement configured to determine when the vehicle has at least partially entered the oncoming lane and is performing an overtaking manoeuvre; a second vehicle detection system to detect the relative position and/or speed of an oncoming vehicle in the oncoming lane; a collision assessment arrangement to determine whether, based on the relative speed and/or position of the vehicle and an oncoming vehicle in the oncoming lane, the overtaking manoeuvre can be safely completed; and an evasion arrangement which is configured, if it is determined that the overtaking manoeuvre cannot be completed safely, to generate control signals to operate one or more vehicle control systems and perform an evasion manoeuvre to move the vehicle from the oncoming lane into the driving lane in a position behind the subject vehicle, wherein: the evasion manoeuvre comprises a lateral movement phase; during at least a first period of the lateral movement phase, the one or more vehicle control systems cause the vehicle to yaw so that the vehicle turns in a first direction towards the driving lane side of the road; during a middle period of the lateral movement phase, the vehicle travels in a substantially straight path; and during a second period of the lateral movement phase, the one or more vehicle control systems cause the vehicle to yaw in a second direction, opposite to the first direction.

Advantageously, the one or more vehicle control systems comprise the brakes of the vehicle, and the vehicle is caused to yaw by applying greater braking torque to one or more wheels on one side of the vehicle than to the wheels on the other side of the vehicle.

Preferably, the one or more vehicle control systems include the steering system of the vehicle, and the vehicle is caused to yaw by steering the vehicle.

Conveniently, the evasion arrangement calculates the path that will be taken by the vehicle during the lateral movement phase, and determines whether, if the lateral movement phase was to be executed from the current position of the vehicle, the path would cause the vehicle to collide with the subject vehicle.

Advantageously, if the evasion arrangement determines that the path would cause the vehicle to collide with the subject vehicle, the evasion manoeuvre includes a longitudinal movement phase, which is executed before the lateral movement phase.

Preferably, during the longitudinal movement phase, the speed of the vehicle is reduced until the vehicle reaches a position in which the lateral movement phase can be executed without colliding with the subject vehicle.

Conveniently, the evasion arrangement calculates a safe position, or range of positions, for the vehicle from which the lateral movement phase can be executed without colliding with the subject vehicle.

Advantageously, the evasion arrangement executes the lateral movement phase if the vehicle is in a predetermined position, or range of positions, with respect to the subject vehicle.

Preferably, if the vehicle is not in the predetermined position, or range of positions, a longitudinal movement phase is executed until it is determined that the vehicle is in the predetermined position, or range of positions.

Conveniently, the position of the vehicle with respect to the subject vehicle is monitored by the first vehicle detection system, or by one or more other sensors of the vehicle, during the longitudinal movement phase.

Advantageously, the second vehicle detection system comprises a reflected radiation system.

The invention also provides a vehicle incorporating the safety system of any of the above.

In order that the invention may more be readily understood embodiments thereof will now be described, by way of example, with reference to the accompanying drawings, in which:
Figure 1 shows a vehicle incorporating a safety system embodying the present invention, before an overtaking manoeuvre;
Figure 2 shows the vehicle of figure 1 during an overtaking manoeuvre; and
Figure 3 shows movement of the vehicle of figures 1 and 2 during an automatic evasion manoeuvre.

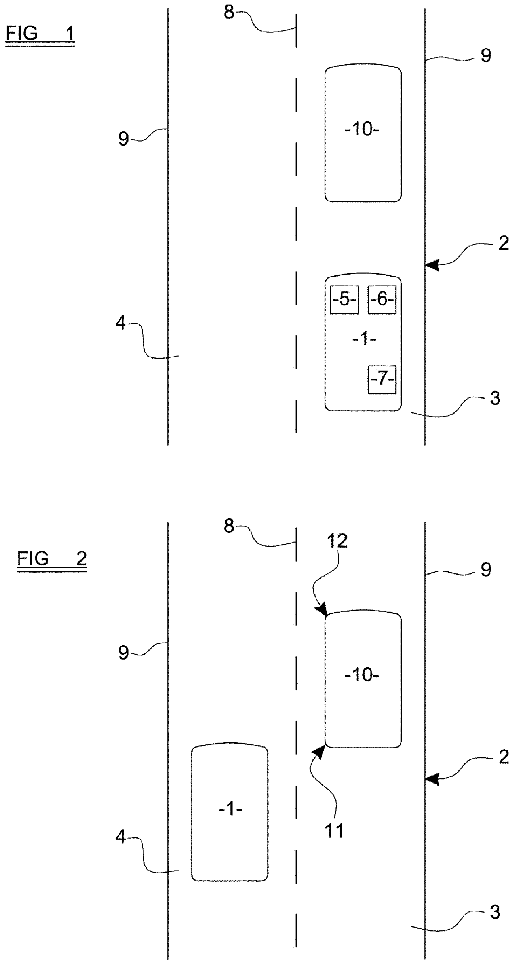

Referring firstly to figure 1, a schematic view 1 is shown of a host vehicle 1, incorporating a safety system embodying the present invention, travelling along a road 2. The road 2 includes a forward lane 3, which is the lane along which the host vehicle 1 may travel during regular driving, i.e. the lane in which the intended direction of travel is the direction in which the host vehicle 1 is moving. The road 2 also includes an oncoming lane 4, adjacent the forward lane 3, in which the expected direction of travel is generally in the opposite direction to the expected direction of travel of the forward lane 3.

In the example shown in figure 1, the road 2 is subject to a rule that vehicles must drive on the right hand side of the road. The forward lane 3 is therefore on the right hand side of the road, and the oncoming lane 4 is on the left hand side of the road 2.

The ensuing discussion will be based on situations where vehicles are expected to drive on the right hand side of the road. Of course, for countries such as the UK and Japan where vehicles are expected to drive on the left hand side of the road, the reader will understand how the discussion may be adapted.

The road 2 includes a central line 8 which is painted or otherwise marked onto the surface of the road 2 and delineates the forward and oncoming lanes 3, 4. The road 2 also has side lines 9 which indicate the left and right edges of the useable road surface. It will be understood that each of the forward and oncoming lanes 3, 4 is generally defined between the central line 8 and one of the side lines 9.

The host vehicle 1 is provided with a number of sensors. A preferred range of sensors is described below.

A forward reflected radiation sensor 5 is oriented to survey the road ahead of the host vehicle 1, and to determine the range to, and relative velocity of, objects that are detected ahead of the host vehicle 1. The forward reflected radiation sensor 5 may, for example, include a radar or lidar system.

In preferred embodiments of the invention the forward reflected radiation sensor 5 may comprise or include a multimode system, incorporating two or more separate reflected radiation sensors with different ranges and/or depths of field of view. For instance, a first reflected radiation sensor may have a relatively long range combined with a relatively narrow field of view, and a second reflected radiation sensor may have a shorter effective range, but a wider field of view.

The host vehicle 1 also includes a forward camera system 6, to gather images of the road 2 and other defects ahead of the vehicle 1.

Furthermore, the host vehicle 1 preferably includes a side/rear detection arrangement 7 to gather information on objects which are on the right-hand side of the host vehicle 1 and to the rear of the host vehicle 1. The side/rear detection arrangement 7 may comprise one or more cameras or reflected radiation systems, as will be apparent from the discussion below.

The host vehicle 1 may also include other sensors, such as a positioning system (e.g. a GPS system), and inertial sensors such as a yaw sensor and lateral and longitudinal accelerometers.

The host vehicle 1 also has an active braking system and/or an active steering system. As the skilled reader will understand, these systems are able to operate the braking and steering systems of the vehicle 1, respectively, without direct input from the driver.

Use of the safety system will now be described.

Figure 1 shows a normal driving situation, in which the host vehicle 1 is driving wholly within the forward lane 3. A subject vehicle 10 is also driving in the forward lane 3, ahead of the host vehicle 1 and in generally the same direction as the host vehicle 1.

The host vehicle 1 has a processor (which may include a network of two or more individual processing units). The processor has a lane detection arrangement which is operable to determine, from the vehicle's sensors, the lanes 3, 4 of the road 2, and also the position of the host vehicle 1 with respect to these lanes 3, 4.

In particular, signals from the forward camera system 6 may be analysed to gather information about lanes. The central line 8 and side lines 9 may be detected by the forward camera system 6, and used to establish the position of the lanes 3, 4 of the road 2. If one or more of the central line 8 and the side lines 9 are absent (or, though wear or being covered with a substance such as grit or snow, are difficult to detect) the processor may look for other indications in the images gathered by the forward camera system 6. For instance, if the surface of the road is of a different colour or reflectivity from the surrounding terrain, the processor may be able to determine the overall width of the road 2, and therefore estimate which portion of the road 2 corresponds to the forward lane 3 and which portion corresponds to the oncoming lane 4.

The processor may also, from information received from the vehicle's positioning system, in combination with stored map data, be able to determine that the host vehicle 1 is travelling along a particular road, and retrieve information regarding the number of lanes of the road, and also possibly the widths of the lanes.

The vehicle's processor implements one or more algorithms to make a determination as to whether the host vehicle 1 is involved in an overtaking manoeuvre. Clearly, if the host vehicle 1 moves from the forward lane 3 into the oncoming lane 4, this is an indication that the host vehicle 1 may be overtaking. However, as will be understood by those skilled in the art, the host vehicle 1 may have moved into the oncoming lane 4 through inattention or fatigue on the part of the driver, or to avoid an obstacle or hazard in the forward lane 3. Techniques for detecting "lane drift" and alerting a driver are known in the art. In preferred embodiments, therefore, the vehicle's processor will take additional factors into account. In one example, a determination that the vehicle is involved in an overtaking manoeuvre will be made if:
- the host vehicle 1 manoeuvres so that at least a part of the host vehicle 1 is within the oncoming lane 4; and
- a subject vehicle 10 is in the forward lane 4 ahead of the host vehicle 1, preferably within a predetermined range of distance.

As an additional requirement, the determination may be made only if the host vehicle 1 is travelling at a speed which is at least equal to that of the subject vehicle 10, or is greater than that of the subject vehicle 10 by a set threshold.

The skilled reader will understand that there are other combinations of criteria which may be used to reach a determination that the host vehicle 1 is involved, or is likely to be involved, in an overtaking manoeuvre.

Figure 2 shows a situation in which the host vehicle 1 has moved into the oncoming lane 4, to overtake the subject vehicle 10, and is travelling at a speed which is greater than that of the subject vehicle 10. Based on information from the lane detection arrangement, the forward reflected radiation sensor 5 and the forward camera system 6, the host vehicle's processor will determine that the host vehicle 1 is involved in an overtaking manoeuvre. An overtaking assistance algorithm will then be initiated.

As a first step, information from the forward reflected radiation sensor 5, and possibly also the forward camera system 6, is analysed to determine whether or not there is a vehicle in the oncoming lane 4 that is travelling in the opposite direction to the host vehicle 1. Techniques for analysing signals from radar and camera data to identify a vehicle are well known and will not be discussed in detail here. However, at this stage it is important to use information from the forward reflected radiation sensor 5 to determine the velocity, relative to the host vehicle 1, of any vehicle which appears to be in the oncoming lane 4. This is because a vehicle in the forward lane 3 in the distance may appear to be in the oncoming lane 4, particularly if the road 2 is not straight. For instance, if, as in the example shown in the figures, vehicles are driving on the right-side of the road, if the road curves to the left it may appear that a vehicle which is really in the forward lane 3 is in the oncoming lane 4 effectively straight ahead of the host vehicle 1.

Instead of (or as well as) a reflected radiation system, a stereo camera system could also be used to determine the velocity of an oncoming vehicle. The skilled reader will realise how a stereo camera system can be implemented to achieve this.

Analysing data relating to the relative velocity of a vehicle in the oncoming lane 4 will assist in distinguishing between vehicles which are being driven in the opposite direction (representing a high risk) and those which may be travelling in the same direction as the host vehicle 1, possibly also involved in an overtaking manoeuvre (representing a much lower risk).

If it is determined that there is a vehicle in the oncoming lane 4 travelling towards the host vehicle 1, a next step is to determine whether the host vehicle 1 may safely complete the overtaking manoeuvre and pull back into the forward lane 3 in front of the subject vehicle 10. This determination may be made at least to an approximate level by calculating the relative speeds of the host vehicle 1 and the vehicle in the oncoming lane 4, and thus estimating the time (assuming a constant relative speed) before the two vehicles collide. This time can then be compared with a threshold time, representing the likely time that the host vehicle 1 will take to complete the overtaking manoeuvre.

If it is determined that there is not, or is unlikely to be, sufficient time for the overtaking manoeuvre to be completed, the driver receives a warning, encouraging the driver not to proceed with the overtaking manoeuvre. This warning may be audible, and may for example take the form of a spoken warning. Visible warnings may also appear on one or more displays or screens of the host vehicle 1. One or more haptic signals, such as vibration of the steering wheel, may also be implemented.

If it is determined that there is sufficient time for the host vehicle 1 to complete the overtaking manoeuvre, a signal maybe given to the driver that it is safe to proceed with the overtaking manoeuvre. Again, this signal may take the form of an audible message and/or one or more visual indications.

As a third possibility, the processor may have insufficient information to determine whether or not the overtaking manoeuvre can be safely completed. This may be the case if the view of the oncoming lane 4 ahead of the host vehicle 1 is limited, for instance by curvature of the road 2. In these cases, the host vehicle 1 may deliver a warning that it is not safe to overtake, or may deliver a warning that it may not be safe to overtake (e.g. an amber symbol, as opposed to a green "safe" signal or a red "danger" symbol), or may not deliver any warning or notification to the driver.

If, on receiving a warning that it is not safe to proceed with the overtaking manoeuvre, the driver decides not to proceed with the manoeuvre and pulls back into the forward lane 3 behind the subject vehicle 10, the lane detection system will recognise this and the overtaking assistance algorithm will be discontinued.

If the host vehicle 1 continues with the overtaking manoeuvre, information from the vehicle sensors will be used to monitor the relative position of the host vehicle 1 with respect to the subject vehicle 10. In a preferred embodiment, the vehicle sensors are used to determine the position of a rear corner 11 of the subject vehicle 10, i.e. the corner of the subject vehicle 10 that is on the rear side of the subject vehicle 10 and closest the centre of the road 2. The vehicle sensors may also detect a front corner 12 of the subject vehicle 10. The skilled reader will appreciate how these points 11, 12 may be determined from information gathered from the front reflected radiation sensor and camera system, and also from the side/rear detection arrangement 7. If only the rear corner 11, but not the front corner 12, can be detected, the processor may assume a standard length of the subject vehicle 10. Alternatively, if both the rear and front corners 11, 12 of the subject vehicle 10 can be detected then the actual length of the subject vehicle 10 can be determined.

It will be understood that, as the host vehicle 1 overtakes and draws approximately level with the subject vehicle 10, the front corner 12 of the subject vehicle 10 will be easier to discern and detect.

The vehicle processor may also determine the absolute position of the host vehicle 1 within the width of the oncoming lane 4. This may be achieved by calculating the distance between the host vehicle 1 and the central line 8 and one or more of the sidelines 9, or solely from one or more of the sidelines 9. Determination of the host vehicle's position within the oncoming lane 4 may alternatively, or in addition, be achieved through the host vehicle's positioning system.

The host vehicle's processor may also determine the width of the forward lane 3, and again this may be achieved by determining the distance between the central line 8 and the side line 9 that bounds the forward lane 3. In some embodiments, the width of the forward lane 3 may be determined during regular driving, before an overtaking manoeuvre begins.

In preferred embodiments of the invention the host vehicle's processor also monitors the space behind the host vehicle 1 (i.e. in the oncoming lane 4), and behind the subject vehicle 10 (i.e. in the forward lane 3). This allows the processor to monitor whether, if it is necessary for the host vehicle 1 to discontinue the overtaking manoeuvre and return to the forward lane 3 behind the subject vehicle 10, there is sufficient space behind the subject vehicle 10 for this to be possible. In addition, if the host vehicle 1 is at least partially alongside the subject vehicle 10, monitoring the space behind the host vehicle 1 allows the processor to determine whether, if host vehicle 1 was to decelerate and return to the forward lane 3 behind the subject vehicle 10, the path for this manoeuvre would blocked by another vehicle in the oncoming lane 4 behind the host vehicle 1.

As the overtaking manoeuvre continues, the vehicle sensors continue to monitor whether there is a vehicle in the oncoming lane 4 travelling towards the host vehicle 1. If a vehicle is identified, the relative position and velocity of this vehicle with respect to the host vehicle 1 are measured.

The time that it is likely to take for the host vehicle 1 to complete the overtaking manoeuvre may be estimated. As discussed above the length of the subject vehicle 10 may be measured or inferred. The velocity of the host vehicle 1 with respect to the subject vehicle 10 can then be used to determine the length of time that it will take for the host vehicle 1 to pass the subject vehicle 10 completely, and reach a stage where the host vehicle 1 may pull back into the forward lane 3 ahead of the subject vehicle 10.

If it appears that there is a vehicle in the oncoming lane 4, travelling in the opposite direction to the vehicle 1, and that the velocity of this vehicle and the host vehicle 1 will lead to a collision before the vehicle 1 can safely complete the overtaking manoeuvre, an automatic evasive algorithm may be activated.

In preferred embodiments of the invention, the automatic evasive manoeuvre is activated by the driver pressing the brake pedal. If the processor determines that there is insufficient time to complete the overtaking manoeuvre safely, and the accelerator pedal is still pressed, the driver may receive a warning to release the accelerator pedal and press the brake pedal.

In alternative embodiments, the automatic evasive manoeuvre may be activated regardless of the pedals that are pressed by the driver.

As part of this algorithm the vehicle processor determines whether there is a safe path for the host vehicle 1 to decelerate, if necessary, to a position behind the subject vehicle 10, and to pull into a space immediately behind the subject vehicle 10 in the forward lane 3. As discussed above determination is made by considering data from sensors (particularly the side/rear detection arrangement 7) monitoring the spaces behind the host vehicle 1 and the subject vehicle 10.

If this path is blocked, for instance by a vehicle close behind the subject vehicle 10, or by a vehicle close behind the host vehicle 1 or fast approaching the host vehicle 1 from behind, the algorithm determines that it is likely that the host vehicle 1 will be involved in a collision. Pre-crash measures are then invoked, for instance the activation of a reversible or irreversible seat belt pre-tensioner.

If, alternatively, it is determined that there is a clear path to allow the host vehicle 1 to decelerate and manoeuvre back into the forward lane 3 behind the subject vehicle 2, an evasive manoeuvre may be automatically carried out.

In this example, the automatic evasive manoeuvre is carried out through controlling the brakes of the host vehicle 1. The automatic evasive manoeuvre includes a lateral braking phase, and may also (if necessary) include a longitudinal braking phase.

In the lateral braking phase, the brakes are controlled so that a greater braking torque is applied to the wheels on the side of the host vehicle 1 closest to the forward lane 3 than by the wheels on the other side of the host vehicle 1. It will be understood that this will cause the host vehicle 1 to rotate about its yaw axis, and turn inwardly towards the forward lane 3.

In preparation for the lateral braking phase, the processor calculates the lateral distance (i.e. the distance across the road 2) that the host vehicle 1 needs to travel in order to be within the forward lane 3. In preferred embodiments the lateral distance is calculated as the distance from the host vehicle 1 to the central line 8 plus the width of the host vehicle 1 itself. If the host vehicle 1 travels this distance in a lateral direction, the host vehicle 1 will be just within the forward lane 3, with an edge (in this case, the left-hand edge) of the host vehicle 1 approximately over the central line 8.

Once the lateral distance has been calculated, the processor calculates the braking torque that need to be applied to the wheels in order to cause the host vehicle 1 to yaw and turn inwardly towards the forward lane 3. In preferred embodiments, the processor calculates the braking torque that will cause the host vehicle 1 to yaw at the maximum rate that can be safely achieved. In performing this calculation, the processor may take into account any or all of:
- the forward speed of the host vehicle 1;
- the current rate of yaw of the host vehicle 1 (if any);
- the gradient and/or camber of the road;
- the conditions of the road surface (e.g. wet or icy); and
- the coefficient of friction between the host vehicle's wheels and the road surface.

In some embodiments, additional braking torque may be applied to only one of the wheels on the forward lane 3 side of the host vehicle 1. In these embodiments, it is preferred that the additional braking torque is applied to the front wheel. In other embodiments, additional braking torque is applied to both wheels on the forward lane 3 side of the host vehicle 1, although in these embodiments the additional braking may be applied more strongly to one of the forward and rear wheels.

When additional braking is applied by the wheels on the forward lane 3 side of the host vehicle 1, no braking may be applied by the wheels on the other side (i.e. the oncoming lane side 4) of the host vehicle 1. In other embodiments, some braking may be applied by the wheels on the other side of the host vehicle 1.

It will be understood that, when the host vehicle 1 reaches the forward lane 3, the host vehicle 1 must yaw once again, in the other direction, in order to align the host vehicle 1 with the forward lane 3. Therefore, during a first period of the lateral braking phase, additional braking is applied to one or both of the wheels on the forward lane 3 side of the host vehicle 1, and in a second period of the lateral braking phase, additional braking is applied to one or both of the wheels on the other side of the host vehicle 1.

In some embodiments the pattern of braking applied during the second period is exactly, substantially or approximately the mirror image of the pattern of braking applied during the first period.

In some embodiments the lateral braking phase comprises applying differential braking to apply the maximum safe yaw rate to the host vehicle 1 (in the first period), and then immediately afterwards applying differential braking to apply the maximum safe yaw rate to the host vehicle 1 in the other direction (in the second period), with the result being that the host vehicle 1 has travelled the calculated lateral distance across the road. Therefore, if the host vehicle 1 has to travel a relatively large distance across the road 2, the first and second periods will continue for longer times than if the host vehicle 1 has to travel only a relatively short distance across the road 2.

The lateral braking phase includes a middle period, in which no differential braking is applied. For instance, it may be undesirable for the host vehicle to turn through an angle greater than 10° with respect to the longitudinal direction of the road 2. Therefore, the lateral braking phase comprises a first period, in which the host vehicle 1 yaws in one direction until it is aligned at around 10° with respect to the longitudinal direction of the road 2, a middle period, in which the host vehicle 1 travels in a substantially straight path, and a second period, in which the host vehicle 1 yaws again to be aligned with the road 2.

The processor then calculates the brake torque, and braking time, that must be applied to the wheel(s) of the host vehicle 1 during each period in order to cause the host vehicle 1 to perform the lateral braking phase.

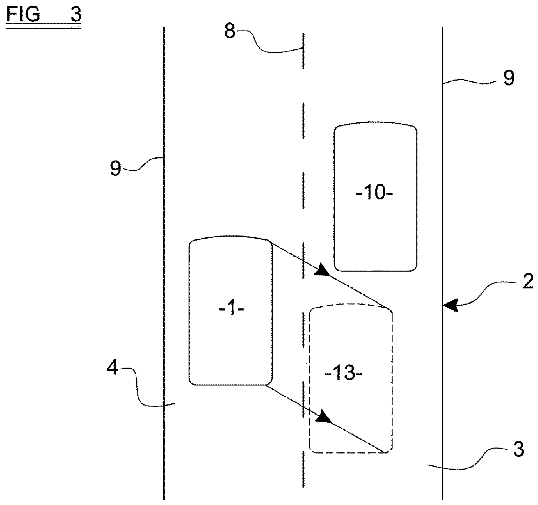

The processor then calculates the path that will be taken by the host vehicle 1 during the lateral braking phase. Referring to figure 3, a schematic view of a projected path of the host vehicle 1 is shown, decelerating and manoeuvring inwardly from a starting position in the oncoming lane 4 to a finishing position 13 in the forward lane 3. In the example shown this path does not intersect with the subject vehicle 10, and so, in performing this manoeuvre from the starting position shown, the host vehicle 1 would not collide with the subject vehicle 10.

However, it can be seen that, if the host vehicle 1 was further forward with respect to the subject vehicle 10, then this path would intersect with the subject vehicle 10, meaning that, in performing this manoeuvre, the host vehicle 1 would collide with the subject vehicle 10.

The processor is therefore able to calculate a safe starting position, or range of starting positions, for the host vehicle 1 in which the lateral braking manoeuvre may be safely executed.

If it is determined that the host vehicle 1 is not in a position where this manoeuvre may be safely executed, then it is necessary for the evasive manoeuvre to include a longitudinal braking phase before the lateral braking phase. The processor calculates the longitudinal braking torque and time that is required to manoeuvre the host vehicle 1 into a safe position. Ideally, the calculated longitudinal braking comprises braking at the maximum possible rate for the minimum time necessary to slow the host vehicle 1 down relative to the subject vehicle 10 and move the host vehicle 1 into a position from which the lateral braking manoeuvre can be executed.

It should be noted that the projected path that the host vehicle 1 will take during the lateral braking phase may be dependent upon the forward speed of the host vehicle 1. Once the host vehicle has undergone the longitudinal braking phase, the forward speed of the vehicle will be reduced, and so the projected path may be recalculated one or more times as during or after the longitudinal braking phase, to generate a new projected path taking the reduced forward speed of the host vehicle 1 (any possibly also any other change in conditions, such as the state of the road surface) into account.

For instance, returning to figure 3, if the host vehicle 1 was approximately level with the subject vehicle 10, the host vehicle 1 would need to apply longitudinal braking so that the host vehicle 1 drops back with respect to the subject vehicle 10, until the host vehicle 1 is in a position where the planned braking manoeuvre may be safely executed.

The automatic evasive manoeuvre is then initiated. Firstly, if necessary, a longitudinal braking torque is applied to the host vehicle 1, causing the host vehicle 1 to decelerate without substantially turning, during a longitudinal braking phase. Once it is determined that the host vehicle 1 has reached an appropriate position with respect to the subject vehicle 10 (as discussed above), the lateral braking phase is initiated, causing the host vehicle 1 to yaw inwardly and manoeuvre into the forward lane 3 behind the subject vehicle 10.

As these two phases of the evasive manoeuvre are carried out, outputs from the vehicle sensors are preferably continually monitored to ensure that the manoeuvre is proceeding as expected, and that the surroundings of the host vehicle 1 appear as they should. If, for instance, the host vehicle 1 decelerates more or less rapidly than expected (e.g. due to a change in road surface conditions), the manoeuvre maybe adjusted accordingly. If the host vehicle 1 decelerates less rapidly then anticipated, the longitudinal braking phase may carry on for longer than calculated, to ensure that the host vehicle 1 does not collide with the subject vehicle 10 during the lateral braking phase. Conversely, if the host vehicle 1 decelerates more rapidly than expected, the lateral braking phase can begin earlier than anticipated.

Once the host vehicle 1 has been safely manoeuvred into the forward lane 3 behind the subject vehicle 10, the automatic evasive manoeuvre has been completed and the evasive algorithm is deactivated.

In other examples, the evasive manoeuvre is not planned in advance, and is carried out "on the fly", by monitoring and adapting to the surroundings of the host vehicle 1. For instance, the processor may determine that, if the front edge of the host vehicle 1 is level with, or behind, the rear edge of the subject vehicle 10, then the lateral braking phase may be safely initiated. If the front edge of the subject vehicle 1 is in front of the rear edge of the subject vehicle 10, a longitudinal braking phase is initiated, in which the host vehicle 1 brakes at the maximum possible rate until it is determined that the front edge of the host vehicle 1 is level with, or behind, the rear edge of the subject vehicle 10. The lateral braking phase is then initiated.

While alignment of the front edge of the host vehicle 1 with the rear edge of the subject vehicle 10 may be used as a guide for commencement of the lateral braking phase, any other relative longitudinal positioning of the host vehicle 1 and subject vehicle 10 may be used for these purposes.

In the lateral braking phase, additional braking torque is applied to one or both wheels on the forward lane 3 side of the host vehicle 1, as discussed above, to cause the host vehicle 1 to yaw inwardly towards the forward lane 3. The processor monitors the signals from the host vehicle's sensors and determines when the host vehicle 1 has travelled half way to a target position within the forward lane 3. When this determination has been made, additional braking torque is applied to one or both wheels on the oncoming lane 4 side of the host vehicle 1, to straighten out the host vehicle 1 with respect to the road 2. When the processor determines that the host vehicle is within the forward lane 3, and is substantially aligned with the direction of travel of the forward lane 3, the automatic evasive manoeuvre has been completed and the evasive algorithm is deactivated.

In the above example, the lateral manoeuvre of the host vehicle 1 from the oncoming lane 4 into the forward lane 3 is achieved by differential braking, i.e. applying a greater braking torque on one or more wheels on one side of the vehicle compared to the wheels on the other side of the host vehicle 1. In alternative embodiments, this lateral manoeuvre may be achieved by automatically steering the vehicle. In further embodiments, both differential braking and differential steering may be applied to effect the lateral manoeuvre.

It is preferred, however, to use differential braking for the lateral braking phase, as it is likely that, during this phase, the driver will be in a state of anxiety and may grip the steering wheel very tightly, potentially interfering with an active steering mechanism by an unknown and unpredictable amount.

In preferred embodiments of the invention, the automatic evasive manoeuvre may be overridden at any time by pressing the accelerator pedal of the host vehicle 1.

It will be understood that embodiments of the invention provide a safety system which is likely to assist drivers in overtaking safely, and in avoiding crash situations when a risky overtaking manoeuvre is attempted. It is particularly anticipated that, if an oncoming vehicle appears during an overtaking manoeuvre, a driver may be too alarmed, and/or not be able to react sufficiently swiftly, to perform an evasive manoeuvre. Embodiments of the invention aim to solve this problem by performing an automatic intervention and causing the vehicle to perform a swift, decisive and controlled evasive manoeuvre.

In the present specification "comprise" means "includes or consists of" and "comprising" means "including or consisting of".

## Claims

1. A vehicle (1) safety system comprising:
a lane detection arrangement to detect, on a road (2) along which the vehicle (1) is driving, a driving lane (3) and at least one substantially adjacent oncoming lane (4);
a first vehicle detection system to detect the speed and/or position, relative to the vehicle (1), of a subject vehicle (10) in the driving lane (3) ahead of the vehicle (1);
an overtaking detection arrangement configured to determine when the vehicle (1) has at least partially entered the oncoming lane (4) and is performing an overtaking manoeuvre;
a second vehicle detection system to detect the relative position and/or speed of an oncoming vehicle in the oncoming lane (4);
a collision assessment arrangement to determine whether, based on the relative speed and/or position of the vehicle (1) and an oncoming vehicle in the oncoming lane (4), the overtaking manoeuvre can be safely completed; and
an evasion arrangement which is configured, if it is determined that the overtaking manoeuvre cannot be completed safely, to generate control signals to operate one or more vehicle control systems and perform an evasion manoeuvre to move the vehicle (1) from the oncoming lane (4) into the driving lane (3) in a position behind the subject vehicle (10), wherein the evasion manoeuve comprises a lateral movement phase **characterized in that**:
during at least a first period of the lateral movement phase, the one or more vehicle control systems cause the vehicle (1) to yaw so that the vehicle (1) turns in a first direction towards the driving lane (3) side of the road (2);
during a middle period of the lateral movement phase, the vehicle (1) travels in a substantially straight path; and
during a second period of the lateral movement phase, the one or more vehicle control systems cause the vehicle (1) to yaw in a second direction, opposite to the first direction.

2. A safety system according to claim 1, wherein the one or more vehicle control systems comprise the brakes of the vehicle (1), and the vehicle (1) is caused to yaw by applying greater braking torque to one or more wheels on one side of the vehicle (1) than to the wheels on the other side of the vehicle (1).

3. A safety system according to claim 2, wherein the one or more vehicle control systems include the steering system of the vehicle (1), and the vehicle (1) is caused to yaw by steering the vehicle (1).

4. A safety system according to one of claims 2 to 3 wherein the evasion arrangement calculates the path that will be taken by the vehicle (1) during the lateral movement phase, and determines whether, if the lateral movement phase was to be executed from the current position of the vehicle (1), the path would cause the vehicle (1) to collide with the subject vehicle (10).

5. A safety system according to claim 4 wherein, if the evasion arrangement determines that the path would cause the vehicle (1) to collide with the subject vehicle (10), the evasion manoeuvre includes a longitudinal movement phase, which is executed before the lateral movement phase.

6. A safety system according to claim 5 wherein, during the longitudinal movement phase, the speed of the vehicle (1) is reduced until the vehicle (1) reaches a position in which the lateral movement phase can be executed without colliding with the subject vehicle (10).

7. A safety system according to one of claims 4 to 6 wherein the evasion arrangement calculates a safe position, or range of positions, for the vehicle (1) from which the lateral movement phase can be executed without colliding with the subject vehicle (10).

8. A safety system according to one of claims 2 to 3, wherein the evasion arrangement executes the lateral movement phase if the vehicle (1) is in a predetermined position, or range of positions, with respect to the subject vehicle (10).

9. A safety system according to claim 8 wherein, if the vehicle (1) is not in the predetermined position, or range of positions, a longitudinal movement phase is executed until it is determined that the vehicle (1) is in the predetermined position, or range of positions.

10. A safety system according to claim 9 wherein the position of the vehicle (1) with respect to the subject vehicle (10) is monitored by the first vehicle detection system, or by one or more other sensors of the vehicle (1), during the longitudinal movement phase.

11. A safety system according to any preceding claim wherein the second vehicle detection system comprises a reflected radiation system (5).

## Patentansprüche

1. Fahrzeug- (1) Sicherheitssystem, umfassend:
eine Spurerkennungsanordnung zur Erkennung, auf einer Straße (2), entlang welcher das Fahrzeug (1) fährt, einer Fahrspur (3) und mindestens einer im Wesentlichen angrenzenden Gegenspur (4);
ein erstes Fahrzeugerkennungssystem zur Erkennung der Geschwindigkeit und/oder Position, relativ zu dem Fahrzeug (1), eines gegenständlichen Fahrzeugs (10) in der Fahrspur (3) vor dem Fahrzeug (1);
eine Überholerkennungsanordnung, die konfiguriert ist zur Bestimmung dessen, wann das Fahrzeug (1) mindestens teilweise in die Gegenspur (4) geraten ist und ein Überholmanöver durchführt;
ein zweites Fahrzeugerkennungssystem zur Erkennung der relativen Position und/oder Geschwindigkeit eines entgegenkommenden Fahrzeugs in der Gegenspur (4);
eine Zusammenstoßbewertungsanordnung zur Bestimmung dessen, ob, auf Basis der relativen Geschwindigkeit und/oder Position des Fahrzeugs (1) und eines entgegenkommenden Fahrzeugs in der Gegenspur (4), das Überholmanöver sicher zu Ende geführt werden kann; und
eine Ausweichanordnung, die konfiguriert ist, wenn bestimmt wird, dass das Überholmanöver nicht sicher zu Ende geführt werden kann, zur Erzeugung von Steuerungssignalen zur Betätigung eines oder mehrerer Fahrzeugsteuerungssysteme und Durchführung eines Ausweichmanövers zum Bewegen des Fahrzeugs (1) von der Gegenspur (4) in die Fahrspur (3) in eine Position hinter der gegenständlichen Fahrzeug (10), wobei das Ausweichmanöver eine Seitwärtsbewegungsphase umfasst, **dadurch gekennzeichnet, dass**:
während mindestens eines ersten Zeitraums der Seitwärtsbewegungsphase, das eine oder mehrere Fahrzeugsteuerungssysteme bewirken, dass das Fahrzeug (1) giert, sodass das Fahrzeug (1) in einer ersten Richtung hin zu der Fahrspur- (3) Seite der Straße (2) gelenkt wird;
während eines mittleren Zeitraums der Seitwärtsbewegungsphase, das Fahrzeug (1) auf einem im Wesentlichen geraden Weg fährt; und
während eines zweiten Zeitraums der Seitwärtsbewegungsphase, das eine oder mehrere Fahrzeugsteuerungssysteme bewirken, dass das Fahrzeug (1) in eine zweite Richtung, entgegen der ersten Richtung, giert.

2. Sicherheitssystem nach Anspruch 1, wobei das eine oder mehrere Fahrzeugsteuerungssysteme die Bremsen des Fahrzeugs (1) umfassen und das Fahrzeug (1) zum Gieren gebracht wird, indem größeres Bremsmoment auf ein oder mehrere Räder auf einer Seite des Fahrzeugs (1) als auf die Räder auf der anderen Seite des Fahrzeugs (1) angewandt wird.

3. Sicherheitssystem nach Anspruch 2, wobei das eine oder mehrere Fahrzeugsteuerungssysteme das Lenksystem des Fahrzeugs (1) beinhalten und das Fahrzeug (1) durch Lenken des Fahrzeugs (1) zum Gieren gebracht wird.

4. Sicherheitssystem nach einem der Ansprüche 2 bis 3, wobei die Ausweichanordnung den Weg berechnet, der von dem Fahrzeug (1) während der Seitwärtsbewegungsphase genommen wird, und bestimmt, ob, wenn die Seitwärtsbewegungsphase von der aktuellen Position des Fahrzeugs (1) ausgehend auszuführen wäre, der Weg bewirken würde, dass das Fahrzeug (1) mit dem gegenständlichen Fahrzeug (10) zusammenstößt.

5. Sicherheitssystem nach Anspruch 4, wobei, wenn die Ausweichanordnung bestimmt, dass der Weg bewirken würde, dass das Fahrzeug (1) mit dem gegenständlichen Fahrzeug (10) zusammenstößt, das Ausweichmanöver eine Längsbewegungsphase beinhaltet, die vor der Seitwärtsbewegungsphase ausgeführt wird.

6. Sicherheitssystem nach Anspruch 5, wobei, während der Längsbewegungsphase, die Geschwindigkeit des Fahrzeugs (1) herabgesetzt wird, bis das Fahrzeug (1) eine Position erreicht, in der die Seitwärtsbewegungsphase ausgeführt werden kann, ohne mit dem gegenständlichen Fahrzeug (10) zusammenzustoßen.

7. Sicherheitssystem nach einem der Ansprüche 4 bis 6, wobei die Ausweichanordnung eine sichere Position, oder Reihe von Positionen, für das Fahrzeug (1) berechnet, von wo aus die Seitwärtsbewegungsphase ausgeführt werden kann, ohne mit dem gegenständlichen Fahrzeug (10) zusammenzustoßen.

8. Sicherheitssystem nach einem der Ansprüche 2 bis 3, wobei die Ausweichanordnung die Seitwärtsbewegungsphase ausführt, wenn das Fahrzeug (1) in einer vorbestimmten Position, oder Reihe von Positionen, mit Bezug auf das gegenständliche Fahrzeug (10) ist.

9. Sicherheitssystem nach Anspruch 8, wobei, wenn das Fahrzeug (1) nicht in der vorbestimmten Position, oder Reihe von Positionen, ist, eine Längsbewegungsphase ausgeführt wird, bis bestimmt wird, dass das Fahrzeug (1) in der vorbestimmten Position, oder Reihe von Positionen, ist.

10. Sicherheitssystem nach Anspruch 9, wobei die Position des Fahrzeugs (1) mit Bezug auf das gegenständliche Fahrzeug (10) von dem ersten Fahrzeugerkennungssystem, oder von einem oder mehreren anderen Sensoren des Fahrzeugs (1), während der Längsbewegungsphase, überwacht wird.

11. Sicherheitssystem nach einem vorhergehenden Anspruch, wobei das zweite Fahrzeugerkennungssystem ein Reflexionsstrahlungssystem (5) umfasst.

## Revendications

1. Système de sécurité d'un véhicule (1), comprenant :
un agencement de détection de voie pour détecter, sur une route (2) suivant laquelle le véhicule (1) est en train de circuler, une voie de circulation (3) et au moins une voie en sens inverse (4) sensiblement adjacente ;
un premier système de détection de véhicule pour détecter la vitesse et/ou la position, par rapport au véhicule (1), d'un véhicule sujet (10) sur la voie de circulation (3) en avant du véhicule (1) ;
un agencement de détection de dépassement configuré pour déterminer quand le véhicule (1) s'est inséré, au moins en partie, sur la voie en sens inverse (4) et est en train de réaliser une manoeuvre de dépassement ;
un second système de détection de véhicule pour détecter la position et/ou la vitesse relatives d'un véhicule en sens inverse sur la voie en sens inverse (4) ;
un agencement d'évaluation de collision pour déterminer, sur la base de la vitesse et/ou de la position relatives du véhicule (1) et d'un véhicule en sens inverse sur la voie en sens inverse (4), si la manœuvre de dépassement peut être réalisée en toute sécurité ; et
un agencement d'esquive qui est configuré, s'il est déterminé que la manœuvre de dépassement ne peut pas être achevée en toute sécurité, pour générer des signaux de commande pour faire fonctionner un ou plusieurs systèmes de commande de véhicule et pour réaliser une manœuvre d'esquive pour déplacer le véhicule (1) de la voie en sens inverse (4) à la voie de circulation (3) dans une position derrière le véhicule sujet (10), la manœuvre d'esquive comprenant une phase de déplacement latéral **caractérisée en ce que** :
pendant au moins une première période de la phase de déplacement latéral, le ou les systèmes de commande de véhicule amènent le véhicule (1) à faire un lacet de sorte que le véhicule (1) tourne dans une première direction vers le côté voie de circulation (3) de la route (2) ;
pendant une période centrale de la phase de déplacement latéral, le véhicule (1) se déplace suivant une trajectoire sensiblement droite ; et
pendant une seconde période de la phase de déplacement latéral, le ou les systèmes de commande de véhicule amènent le véhicule (1) à faire un lacet dans une seconde direction, opposée à la première direction.

2. Système de sécurité selon la revendication 1, dans lequel le ou les systèmes de commande de véhicule comprennent les freins du véhicule (1) et dans lequel le véhicule (1) est amené à faire un lacet en appliquant à une ou plusieurs roues d'un côté du véhicule (1) un couple de freinage supérieur à celui appliqué aux roues de l'autre côté du véhicule (1).

3. Système de sécurité selon la revendication 2, dans lequel le ou les systèmes de commande de véhicule incluent le système de direction du véhicule (1) et dans lequel le véhicule (1) est amené à faire un lacet en dirigeant le véhicule (1).

4. Système de sécurité selon l'une quelconque des revendications 2 et 3, dans lequel l'agencement d'esquive calcule la trajectoire qui sera prise par le véhicule (1) pendant la phase de déplacement latéral et détermine, si la phase de déplacement latéral doit être exécutée à partir de la position actuelle du véhicule (1), si la trajectoire provoquait la collision du véhicule (1) avec le véhicule sujet (10).

5. Système de sécurité selon la revendication 4, dans lequel, si l'agencement d'esquive détermine que la trajectoire provoquera la collision du véhicule (1) avec le véhicule sujet (10), la manœuvre d'esquive inclut une phase de déplacement longitudinal qui est exécutée avant la phase de déplacement latéral.

6. Système de sécurité selon la revendication 5, dans lequel, pendant la phase de déplacement longitudinal, la vitesse du véhicule (1) est réduite jusqu'à ce que le véhicule (1) atteigne une position où la phase de déplacement latéral peut être exécutée sans collision avec le véhicule sujet (10).

7. Système de sécurité selon l'une quelconque des revendications 4 à 6, dans lequel l'agencement d'esquive calcule une position de sécurité, ou une plage de positions, pour le véhicule (1) d'où la phase de déplacement latéral peut être exécutée sans collision avec le véhicule sujet (10).

8. Système de sécurité selon l'une des revendications 2 et 3, dans lequel l'agencement d'esquive exécute la phase de déplacement latéral si le véhicule (1) est dans une position prédéterminée, ou dans une plage de positions, par rapport au véhicule sujet (10).

9. Système de sécurité selon la revendication 8, dans lequel, si le véhicule (1) n'est pas dans la position prédéterminée, ou dans la plage de positions, une phase de déplacement longitudinal est exécutée jusqu'à ce qu'il soit déterminé que le véhicule (1) est dans la position prédéterminée, ou dans la plage de positions.

10. Système de sécurité selon la revendication 9, dans lequel la position du véhicule (1) par rapport au véhicule sujet (10) est surveillée par le premier système de détection de véhicule, ou par un ou plusieurs autres capteurs du véhicule (1), pendant la phase de déplacement longitudinal.

11. Système de sécurité selon l'une quelconque des revendications précédentes, dans lequel le second système de détection de véhicule comprend un système de rayonnement réfléchi (5).
